# EUROPEAN PATENT APPLICATION

(11) **EP 2 113 880 A2**
(43) Date of publication of application: **04.11.2009**
(21) Application number: 09251191.4
(22) Date of filing: 27.04.2009
(51) Int. Cl.: G06Q 30/00

(54) **Plug and play architecture for a kiosk digital content distribution system**

(30) Priority: 28.04.2008 US 111094
(71) Applicant: Digital Electronics Solutions Development Corporation, 31952 Al Khobar (SA)
(72) Inventor: Srage, Jay M., Dallas Texas 75218 (US)
(74) Representative: Carter, Stephen John

(57) **Abstract**

A kiosk digital content distribution system includes electronic components adapted to provide the download, purchase and rental of digital content. The distribution system includes a memory input module adapted to receive a portable memory device. A copy of the digital content is transferable to the portable memory device without internet connectivity.

## Description

### BACKGROUND OF THE INVENTION

### Field of the Invention

This invention relates to a kiosk for the transfer of digital content to a portable memory device and, more particularly, to a kiosk digital content distribution system that provides for the download, purchase and rental of digital content without the need for an internet connection.

### Description of the Related Art

The digital conversion of content started in the late 1990s. Most of the digital content has been limited in size due to the limitations of the content itself. For example, a typical music track ranges in size from two to three megabytes, which typically takes seconds to download using the internet.

However, larger size content such DVD movies, and now with the advent of HD movies and BLU-Ray movies, the size of each file will far exceed 1.5 Gigabytes. Downloaded files of this size and larger can take a long time when using a typical household internet connection. A long download time can take hours and can significantly affect the user experience.

Accordingly, there is a need to provide a kiosk that allows digital content to be downloaded at a faster rate.

### BRIEF SUMMARY OF THE INVENTION

The present invention provides a kiosk digital content distribution system, wherein the kiosk includes electronic components adapted to provide the download, purchase and rental of digital content. The distribution system includes a memory input module adapted to receive a portable memory device. A copy of the digital content is transferable to the portable memory device without internet connectivity.

The present invention also provides a method of remotely managing the content of the kiosk digital content distribution system, wherein the method includes providing a plurality of kiosks at remote locations and providing a main content server. The method also includes updating each kiosk of the plurality of kiosks with specific content unique to each kiosk.

The present invention further provides a method of managing promotions using the kiosk digital content distribution system, wherein the method includes displaying promoted content on a section of a touch screen of a kiosk digital content distribution system and providing a remote website to select a type of content and associated information and data to be promoted. The method includes updating the section of the touch screen with the selected promoted content and associated information.

These and other features, aspects, and advantages of the present invention will become better understood with reference to the following drawings and description.

### BRIEF DESCRIPTION OF THE DRAWINGS

FIG. 1A is a perspective view of a kiosk digital content distribution system;

FIG. 1B is a schematic view of a content server of the kiosk of FIG. 1A;

FIG. 1C is a schematic view of a DRM server of the kiosk of FIG. 1A;

FIGS. 1D is a schematic view of an HTTP server of the kiosk of FIG. 1A;

FIG. 2 is a schematic view of a connection of a content server, a DRM server and an HTTP server;

FIG. 3 is a flow chart of a method of remote content management of a kiosk digital content distribution system; and

FIG. 4 is a flow chart of a method for promotions management using a kiosk digital content distribution system.

### DETAILED DESCRIPTION OF THE INVENTION

The present invention provides a stand-alone kiosk system intended for digital content distribution which enhances the user experience through a speedy download, and that solves the problem of the relatively slow in-home or even corporate internet connectivity. The plug-n-play architecture facilitates the deployment and installation of the kiosk.

The kiosk typically includes two outlets: one power plug that connects the kiosk to a 110-220V outlet, and an Ethernet line that connects the kiosk to the internet. The kiosk typically includes and has built-in seven components: (1) The (Digital Rights Management) DRM Server, (2) high-capacity Storage (3) an HTTP Server to establish the communication with the main media server where all available content is stored (4) a memory input module that can support available types of memory cards such but not limited to SD, Micro-SD, Mini-SD, Compact Flash, USB Flash (5) Payment terminal - which could be a credit or debit card point of sale (6) PC hosting the user interface and (7) a touch screen that allows the consumer to select the content to be purchased and interact with the system. The kiosk can have a user interface which allows the consumer the content available in the storage component, wherein the content can be movies, audio music files, video music files, video games, ringtones, audio books, as well as other types of digitized content.

Because of the plug-n-play architecture, the kiosk can be securely deployed anywhere where power and internet connections are available. The kiosk comes pre-loaded from the manufacturer with a base of content library, and gets updated regularly through its internet connection with new digital content. The kiosk comes pre-loaded with content, and updated content gets transferred continuously and stored securely within the kiosk. The kiosk will make available the completed transferred updated content on a daily basis at a specific time. The kiosk would duplicate and apply the same DRM usage and security rules to every piece of downloaded content. With the content available within a secure kiosk environment, it can be securely download to any type of portable memory or portable device with a USB input, wherein the DRM rules and keys are transferred to the memory device at a speed restricted only by the interface speed between the PC and the memory card or portable device. This reduces the download time for large files (i.e. larger than one gigabyte) from hours to just minutes or even less depending on the file size.

A plug-n-play kiosk used for digital content distribution, download, purchase and rental is presented. With the convergence of media with the internet, digital content production and consumption has been on an exponential growth curve since early this decade. The consumer can access digital content (music, movies, e-books, shared files, etc.) through multiple channels such online and mobile phones. A new access channel is emerging, which is the kiosk placed in a retail environment. While today, the deployment of kiosks intended for digital retail sales is still limited, the value add of these kiosks is being recognized by retailers. The kiosks offer the experience of in-store shopping driving foot traffic into the stores, in addition to savings in significant high-value shelf space. A typical DVD rack that consumes expensive shelf space can now be reduced to a kiosk the size of an ATM cash machine that sits in the corner of a store.

The issue today with the deployed kiosks is that they are dependent on the typical DSL internet connectivity and the speed of that connection, rendering the download of large file sizes an impractical user experience. In addition, any downtime in the internet connectivity would bring down the whole kiosk with no access to content by the user. Any downtime would directly translate to loss of sales. So the content sold is limited to music and other small-size digital files and only available when an internet connection is available. A standalone kiosk system intended for digital content purchase and rental that enhances user experience through a speedy download, and that solves the problem of internet dependency is presented. The user can download a movie in matter of minutes or less, and if the internet connection is down, the user can still access content for download, purchase or rental, and the downtime becomes completely transparent. The plug-n-play architecture also facilitates deployment and installation.

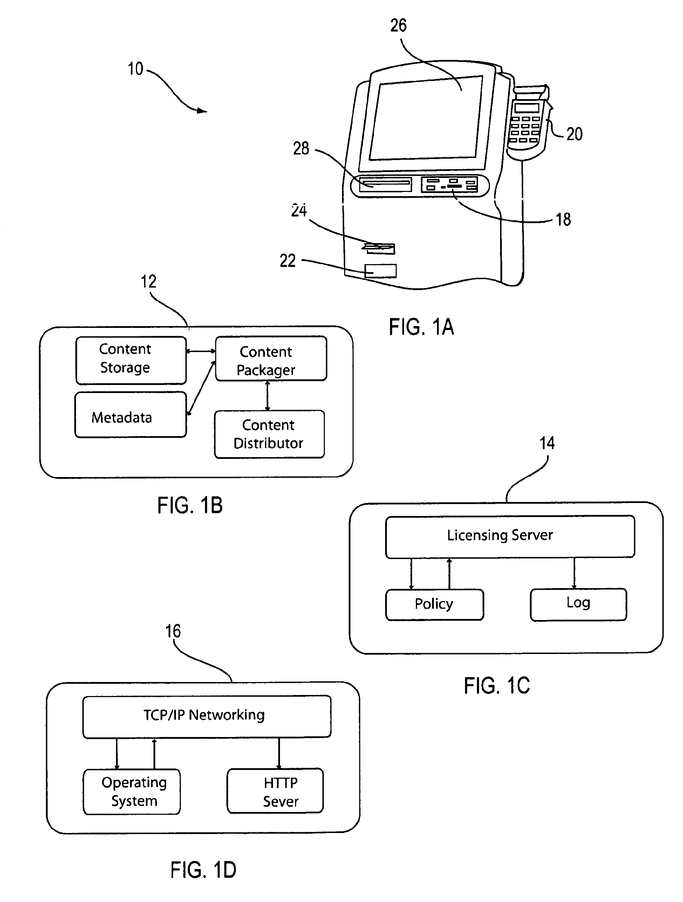

FIGs. 1A, 1B, 1C and 1D illustrate an embodiment of a kiosk 10 used for digital content (such music, movies, videos, games, and mobile content) sale or rental in accordance with particular embodiments of the present invention. The kiosk 10 may have 2 outlets that include a power plug that connects the kiosk 10 to a 110-220V outlet, and an Ethernet line that connects the kiosk 10 to the internet.

The kiosk 10 includes and has the following built-in components: a (Digital Rights Management)DRM server 14, a content storage server 12, an HTTP server 16 to establish the communication with the main media server where all available content is stored, a memory input module 18 that can support available types of memory cards such but not limited to SD, Micro-SD, Mini-SD, Compact Flash, USB Flash (the USB input can be used to plug in portable devices with USB input), a Payment terminal 20, 22, and 24, which could be a credit or debit card, an RFID and/or smartcard, and/or a cash acceptor point of sale respectively, a PC 30 hosting the user interface and a touch screen 26 that allows the consumer to select the content to be purchased and interact with the system, and a rewritable CD drive 28.

The kiosk 10 can include a user interface which allows the consumer to interact with the kiosk 10 and access the content available in the content storage server 12.

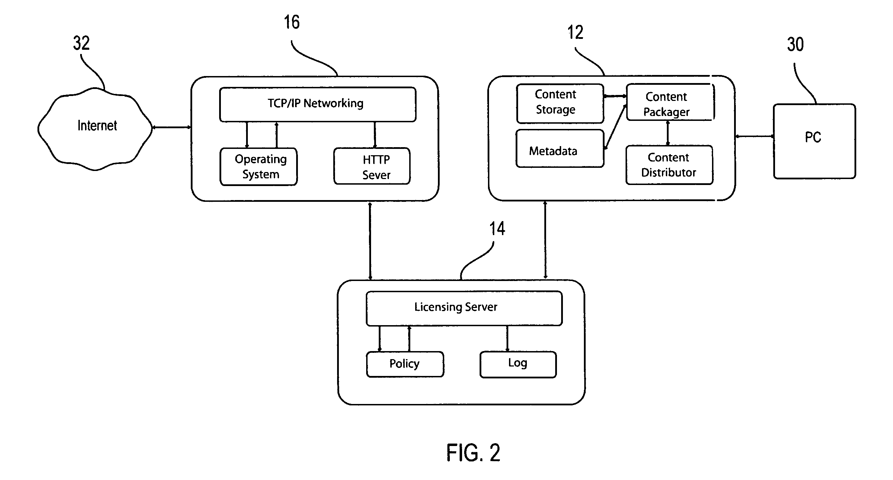

FIG 2 illustrates the connection of items a, b, c and f. When a portable device is plugged in, and the user decides to download or make a purchase or rental, the PC issues a command to the content storage server 12 to download a specific content. The DRM server 14 issues the policy, the key and the license. The content server adds the DRM wrapper to the content and downloads it via the PC to the portable device.

The kiosk 10 comes pre-loaded from manufacturing. The content providers upload their digital content on a hard disk drive. The content from different providers is then aggregated and stored on a high-capacity disk drive. All the relevant content is then uploaded into the kiosk 10 content server, with the associated DRM wrappers stored on the DRM server 14. The user can choose to burn a CD or download to a portable device; which could be a USB stick, a hard disk drive, a memory stick, a memory card, a mobile phone, a laptop or a media player. If the user decides to burn a CD, then the user can only do so with open content, such MP3 music tracks or MPEG-4 video that don't have DRM rules apply. The user interface will display a window of selected content. If the user decides to checkout, he or she will make a payment via the credit card terminal, RFID station, or via cash. The kiosk 10 will filter out the open content from the DRM protected content, and the user chooses by interacting with the touch screen the content he or she wishes to burn on CD. The PC hosting the user interface will initiate a request to the storage server to upload the selected, and the content is transferred from the storage server, through the PC and onto the CD. The content will be uploaded on the CD via the CD burner.

If the user decides to plug any portable device with memory capacity to the memory input device module, he or she can download either open or DRM-protected content. Using the user interface displayed on the touch screen, he or she selects the content to purchased or rented. The user interface will display a checkout window. Once confirmed, the user makes a payment via credit card, an RFID station, or cash. Once payment is confirmed, the PC hosting the user interface will send the request to the content server that validates the request for DRM-protected content. The content server communicates with the DRM server 14 to issue the appropriate DRM key and license, adds the wrapper to the encrypted content, and transfers the content via the PC connected to the memory input-device module and into the portable device.

Because of the plug-n-play architecture, the kiosk 10 can be securely deployed anywhere where power is available. The content can be securely purchased or rented without dependence on the internet. However, to maintain the latest content updates (latest movie releases, latest music charts, etc.), the kiosk HTTP server 16 maintains an internet connection 32 for a continuous download of new content. The kiosk 10 will make available the completed transferred updated content on a daily basis at a specific time. The kiosk 10 would duplicate and apply the same DRM usage and security rules to every piece of downloaded content. With the content available within the kiosk secure environment, it can be securely download to any type of portable memory or portable device with all DRM rules and keys issued to the device at a speed restricted only by the interlace speed between the PC and the portable memory device, memory card or portable device; which brings down the download time for large-size files to just minutes or even less depending on the file size.

The internet connectivity can also be used for remote testing and maintenance of the kiosk 10. A signal is sent out from the main media server that supplies the kiosk 10 with content to test the different components of the kiosk hardware and software.

The internet connectivity can also be used for remote content management and content promotion push from a dedicated remote website. The remote website would be able to control the kiosks 10 remotely by pushing specific content to be promoted on a section of the screen user interface. The remote website can also push specific content to a single kiosk, a group of kiosks, or all of the kiosks that are connected and network to a single node.

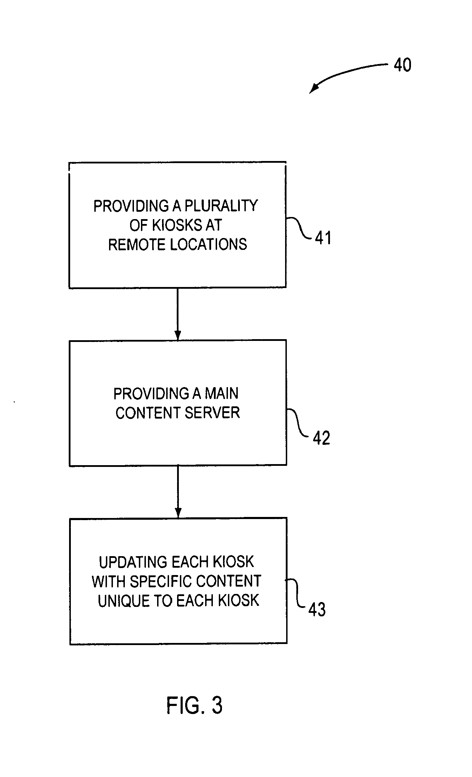

FIG. 3 depicts a flow chart of a method 40 of remote content management of a kiosk digital content distribution system. The method includes Step 41 of providing a plurality of kiosks at remote locations. Step 42 of providing a main content server, and Step 43 of updating each kiosk of the plurality of kiosks with specific content unique to each kiosk.

The method 40 may further comprise the step of grouping multiple kiosks of the plurality of kiosks according to predetermined categories. In embodiments that utilize this step, Step 43 of updating each kiosk may include updating each grouping of kiosks with specific content unique to each grouping of kiosks.

The method 40 may have other variations in accordance with the present invention. For example, Step 43 of updating each kiosk includes updating all of the plurality of kiosks with the same content.

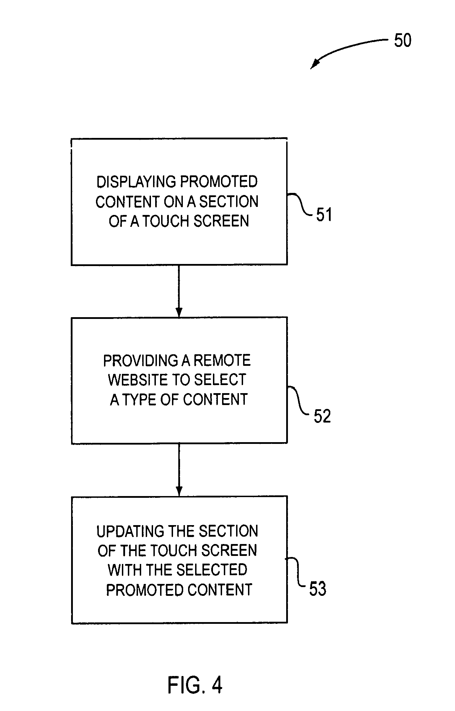

FIG. 4 depicts a method 50 for promotions management using a kiosk digital content distribution system. The method 50 may include Step 51 of displaying promoted content on a section of a touch screen of a kiosk digital content distribution system, Step 52 of providing a remote website to select a type of content and associated information and data to be promoted, and Step 53 updating the section of the touch screen with the selected promoted content and associated information.

The method 50 may have variations in accordance with particular embodiments of the present invention. For example, Step 53 of updating the section of the touch screen includes connecting to the kiosk through an internet connection of an HTTP server of the kiosk.

The method 50 may further comprise rotating the display of promoted content among a plurality of selected promoted content.

The embodiments of the invention described herein are exemplary and numerous modifications, variations and rearrangements can be readily envisioned to achieve substantially equivalent results, all of which are intended to be embraced within the spirit and scope of the invention.

## Claims

1. A kiosk digital content distribution system, the kiosk comprising:
electronic components adapted to provide at least one of the download, purchase and rental of digital content; and
a memory input module adapted to receive a portable memory device, wherein a copy of the digital content is transferable to the portable memory device without internet connectivity.

2. The kiosk of claim 1, wherein the electronic components comprise:
a DRM server adapted store DRM licenses and keys associated with the digital content, the DRM server issuing DRM policy in response to one of download, purchase and rental of the digital content;
a content storage server adapted to store the digital content;
an HTTP server adapted to connect the kiosk to the internet, wherein the HTTP server is configured to allow remote maintenance, remote testing, and remote continuous content update;
a point of sale terminal adapted to receive payments via one of a credit card, RFID, and cash;
a touch screen with a user interface; and
a PC adapted to host the user interface and connect the portable memory device to the content storage server.

3. The kiosk of claim 2, further comprising a recordable CD drive configured to write digital content onto a CD in response to one of the download, purchase and rental of digital content.

4. The kiosk of claim 3, wherein the kiosk is adapted to only write digital content that is open content.

5. The kiosk of claim 4, wherein the kiosk is adapted to filter digital content that is open content from DRM-protected content, the filtered items displayed on the user interface for a user desiring to copy the digital content to a CD.

6. The kiosk of claim 2, wherein the kiosk is adapted to allow transfer of open content and DRM-protected digital content in response to a user plugging the portable memory device into the memory input module.

7. The kiosk of claim 6, wherein the PC is configured to send a transfer request to the content server in response to a selection of digital content by a user.

8. The kiosk of claim 7, wherein the content server is communicatively coupled to the DRM server, wherein the DRM server issues a wrapper comprising the DRM key and license associated with the selected digital content and the content server adds the wrapper to the digital content and transfers the digital content to the portable memory device.

9. The kiosk of claim 2, further comprising a main media server coupled to the HTTP server via an internet connection, the main media server adapted to continuously provide updated digital content to the kiosk.

10. A method of remote content management of a kiosk digital content distribution system, the method comprising:
providing a plurality of kiosks at remote locations;
providing a main content server; and
updating each kiosk of the plurality of kiosks with specific content unique to each kiosk.

11. The method of claim 10, further comprising grouping multiple kiosks of the plurality of kiosks according to predetermined categories.

12. The method of claim 11, wherein the step of updating each kiosk includes updating each grouping of kiosks with specific content unique to each grouping of kiosks.

13. The method of claim 10, wherein the step updating each kiosk includes updating all of the plurality of kiosks with the same content.

14. A method for promotions management using a kiosk digital content distribution system, the method comprising:
displaying promoted content on a section of a touch screen of a kiosk digital content distribution system;
providing a remote website to select a type of content and associated information and data to be promoted; and
updating the section of the touch screen with the selected promoted content and associated information.

15. The method of claim 14, wherein the updating of the section of the touch screen includes connecting to the kiosk through an internet connection of an HTTP server of the kiosk.

16. The method of claim 14, further comprising rotating the display of promoted content among a plurality of selected promoted content.
